# EUROPEAN PATENT SPECIFICATION

(11) **EP 3 104 630 B1**
(45) Date of publication and mention of the grant of the patent: **05.05.2021**
(21) Application number: 14884475.6
(22) Date of filing: 07.03.2014
(51) Int. Cl.: H04W 4/02, G01S 19/25, H04W 4/80, H04W 4/029, G01S 19/05

(54) **METHOD AND APPARATUS FOR SHARING DATA BETWEEN POSITIONING DEVICES**
VERFAHREN UND VORRICHTUNG ZUR GEMEINSAMEN DATENNUTZUNG ZWISCHEN POSITIONIERUNGSVORRICHTUNGEN
PROCÉDÉ ET APPAREIL DE PARTAGE DE DONNÉES ENTRE DES DISPOSITIFS DE POSITIONNEMENT

(43) Date of publication of application: 14.12.2016
(73) Proprietor: Huawei Device Co., Ltd., Dongguan, Guangdong 523808 (CN)
(72) Inventor: CHI, Haizhang, Shenzhen Guangdong 518129 (CN); ZHU, Yong, Shenzhen Guangdong 518129 (CN); WANG, Jinyan, Shenzhen Guangdong 518129 (CN)
(74) Representative: Pfenning, Meinig & Partner mbB
(86) International application number: PCT/CN2014/073060
(87) International publication number: WO 2015/131398

(56) References cited:
- CN-A- 101 304 558
- CN-A- 101 435 861
- CN-A- 102 405 420
- US-A1- 2007 290 920
- US-A1- 2009 079 622
- US-A1- 2011 205 110
- US-A1- 2012 133 556
- US-A1- 2013 029 685

## Description

### TECHNICAL FIELD

Embodiments of the present invention relate to communications technologies, and in particular, to a method and an apparatus for sharing data between positioning devices.

### BACKGROUND

With development of mobile technologies, various positioning devices applied to vehicles appear. Common positioning devices include a mobile phone and a vehicle terminal that have a positioning function.

A user enables a positioning function by using an application layer user interface of a positioning device. An operating system in the positioning device invokes a global positioning system (Global Positioning System, GPS for short) module according to a command delivered by the application layer user interface, so that the GPS module in an enabled state communicates with a satellite and obtains auxiliary data and original geographical location information of a vehicle that are sent by the satellite. GPS software in the operating system processes the auxiliary data and the original geographical location information of the vehicle, to obtain precise latitude and longitude information of a location of the vehicle. The auxiliary data is a group of data about the satellite and is used to calibrate the original geographical location information of the vehicle, so as to obtain the latitude and longitude information.

In the prior art, if no auxiliary data is stored in a positioning device, or if auxiliary data is stored in a positioning device but the stored auxiliary data is lost or expires, the positioning device needs to communicate with a satellite to acquire the auxiliary data, and a process of acquiring the auxiliary data needs to consume time. As a result, a positioning speed of the positioning device is relatively low.
US2011205110A1 discloses a communication device within a GNSS group which propagates GNSS assistance data to one or more other communication devices in the GNSS group utilizing direct device-to-device connections. The GNSS assistance data comprises ephemeris received from one or more GNSS satellites and/or predicted ephemeris. As a source device, the communication device generates, and/or acquires from other resources such as a remote location server, the predicted ephemeris. As a destination device, the communication device receives existing GNSS assistance data from a source device and/or other communication devices in the GNSS group.

### SUMMARY

The invention is defined by the independent claims. Embodiments of the present invention provide a method and a system according to the independent claims for sharing data between positioning devices, to improve a positioning speed of a positioning device.

According to an aspect of the embodiments of the present invention, a method for sharing data between positioning devices is provided, including:
acquiring, by a first positioning device, auxiliary data from a positioning server, where the auxiliary data is used by the first positioning device to perform positioning by combining original geographical location information corresponding to the first positioning device; and
sending, by the first positioning device, the auxiliary data to a second positioning device, so that the second positioning device performs positioning according to the auxiliary data and original geographical location information that corresponds to the second positioning device, where the second positioning device and the first positioning device are located in a same local area network.

According to another aspect of the embodiments of the present invention, a method for sharing data between positioning devices is provided, including:
receiving, by a second positioning device, auxiliary data sent by a first positioning device, where the auxiliary data is acquired by the first positioning device from a positioning server and is data for the first positioning device to perform positioning by combining original geographical location information corresponding to the first positioning device; and
performing, by the second positioning device, positioning according to the auxiliary data and original geographical location information that corresponds to the second positioning device, where the second positioning device and the first positioning device are located in a same local area network.

According to another aspect of the embodiments of the present invention, a first positioning device is provided, including:
an acquiring module, configured to acquire auxiliary data from a positioning server, where the auxiliary data is used by the first positioning device to perform positioning by combining original geographical location information corresponding to the first positioning device; and
a sending module, configured to send the auxiliary data to a second positioning device, so that the second positioning device performs positioning according to the auxiliary data and original geographical location information that corresponds to the second positioning device, where the second positioning device and the first positioning device are located in a same local area network.

According to another aspect of the embodiments of the present invention, a second positioning device is provided, including:
a receiving module, configured to receive auxiliary data sent by a first positioning device, where the auxiliary data is acquired by the first positioning device from a positioning server and is data for the first positioning device to perform positioning by combining original geographical location information corresponding to the first positioning device; and
a positioning module, configured to perform positioning according to the auxiliary data and original geographical location information that corresponds to the second positioning device.

According to another aspect of the embodiments of the present invention, a first positioning device is provided, including a receiver and a transmitter, where
the receiver is configured to acquire auxiliary data from a positioning server, where the auxiliary data is used by the first positioning device to perform positioning by combining original geographical location information corresponding to the first positioning device; and
the transmitter is configured to send the auxiliary data to a second positioning device, so that the second positioning device performs positioning according to the auxiliary data and original geographical location information that corresponds to the second positioning device, where the second positioning device and the first positioning device are located in a same local area network.

According to another aspect of the embodiments of the present invention, a second positioning device is provided, including a receiver and a processor, where
the receiver is configured to receive auxiliary data sent by a first positioning device, where the auxiliary data is acquired by the first positioning device from a positioning server and is data for the first positioning device to perform positioning by combining original geographical location information corresponding to the first positioning device; and
the processor is configured to perform positioning according to the auxiliary data and original geographical location information that corresponds to the second positioning device, where the second positioning device and the first positioning device are located in a same local area network.

According to another aspect of the embodiments of the present invention, a system for sharing data between positioning devices is provided, including the first positioning device and the second positioning device.

According to the method and the apparatus for sharing data between positioning devices provided in the embodiments of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

### BRIEF DESCRIPTION OF DRAWINGS

FIG. 1 is a flowchart of a method for sharing data between positioning devices according to an embodiment of the present invention;
FIG. 2 is a flowchart of a method for sharing data between positioning devices according to another embodiment of the present invention;
FIG. 3 is a flowchart of a method for sharing data between positioning devices according to another embodiment of the present invention;
FIG. 4 is a flowchart of a method for sharing data between positioning devices according to another embodiment of the present invention;
FIG. 5 is a structural diagram of a first positioning device according to an embodiment of the present invention;
FIG. 6 is a structural diagram of a second positioning device according to an embodiment of the present invention;
FIG. 7 is a structural diagram of a second positioning device according to another embodiment of the present invention; and
FIG. 8 is a structural diagram of a system for sharing data between positioning devices according to an embodiment of the present invention.

### DESCRIPTION OF EMBODIMENTS

To describe the technical solutions in the embodiments of the present invention or in the prior art more clearly, the following briefly describes the accompanying drawings required for the embodiments. Apparently, the accompanying drawings in the following description show some embodiments of the present invention, and persons of ordinary skill in the art may still derive other drawings from these accompanying drawings without creative efforts.

The terms used in the embodiments of the present invention are merely for the purpose of illustrating specific embodiments, and are not intended to limit the present invention. The terms "a", "said" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, components, elements, and their combinations not excluded.

It should be understood that although the embodiments of the present invention may describe various positioning devices by using terms such as first and second, the positioning devices should not be limited to these terms. These terms are merely used to distinguish the positioning devices from one another. For example, a first positioning device may be referred to as a second positioning device, and similarly, the second positioning device may be referred to as the first positioning device without departing from a scope of the embodiments of the present invention.

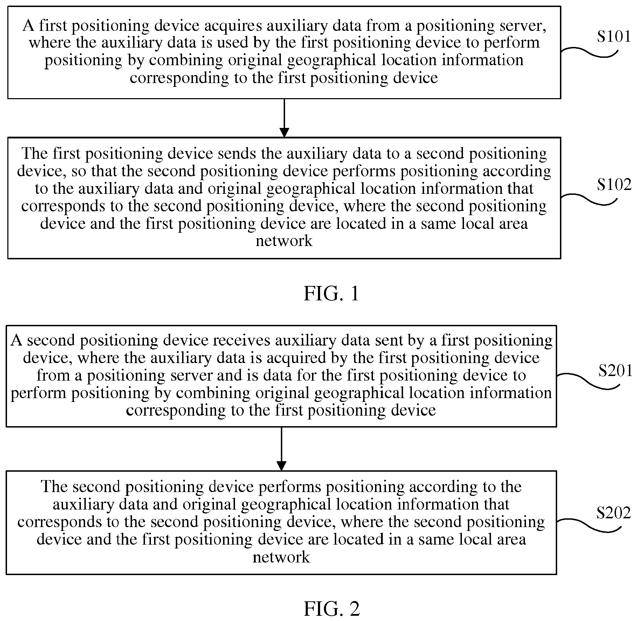

FIG. 1 is a flowchart of a method for sharing data between positioning devices according to an embodiment of the present invention. This embodiment of the present invention is applicable to sharing of auxiliary data between multiple positioning devices in a vehicle, so that a positioning device receiving the auxiliary data performs positioning according to the auxiliary data. Specifically, steps of the method for sharing data between positioning devices are as follows:

Step S101: A first positioning device acquires auxiliary data from a positioning server, where the auxiliary data is used by the first positioning device to perform positioning by combining original geographical location information corresponding to the first positioning device.

The first positioning device may be any device that can perform positioning, for example, may be a mobile terminal such as a mobile phone or a vehicle terminal, which is not limited in this embodiment of the present invention. The acquiring, by a first positioning device, auxiliary data from a positioning server such as a satellite is specifically: sending, by the first positioning device, an auxiliary data acquiring request to the satellite, and returning, by the satellite, the auxiliary data to the first positioning device. The auxiliary data is a group of data related to the satellite and is used by the first positioning device to perform positioning by combining original geographical location information corresponding to the first positioning device. Specifically, the first positioning device calibrates the original geographical location information corresponding to the first positioning device by using the auxiliary data, so as to obtain latitude and longitude information corresponding to a geographical location of the first positioning device.

Step S102: The first positioning device sends the auxiliary data to a second positioning device, so that the second positioning device performs positioning according to the auxiliary data and original geographical location information that corresponds to the second positioning device, where the second positioning device and the first positioning device are located in a same local area network.

The second positioning device may be any device that can perform positioning, for example, may be a mobile terminal such as a mobile phone or a vehicle terminal, which is not limited in this embodiment of the present invention. The first positioning device and the second positioning device are located in the same local area network, for example, in a same vehicle. The first positioning device sends the auxiliary data to the second positioning device in a wireless transmission manner or in a wired transmission manner, so that the second positioning device calibrates the original geographical location information corresponding to the second positioning device by using the auxiliary data, so as to obtain latitude and longitude information corresponding to a geographical location of the second positioning device.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

Based on the foregoing embodiment, the acquiring, by a first positioning device, auxiliary data from a positioning server includes: acquiring, by the first positioning device, the auxiliary data from the positioning server, and parsing the auxiliary data, where the auxiliary data includes one or a combination of several of the following data: an ephemeris, an almanac, a time, and status data.

The parsing, by the first positioning device, the auxiliary data acquired from the positioning server is specifically performed by using a fireware chip in the first positioning device, where the parsed auxiliary data includes an ephemeris, an almanac, a time, and status data. The ephemeris, the almanac, the time, and the status data that are included in the auxiliary data are an ephemeris, an almanac, a time, and status data that corresponds to status information of a satellite at a moment when the satellite sends the auxiliary data, where the ephemeris, the almanac, the time, and the status data are recorded in the satellite at the auxiliary data sending moment. The ephemeris, the almanac, the time, and the status data form a data group, where the data group is stored in the first positioning device.

The original geographical location information corresponding to the first positioning device is information sent by the positioning server to the first positioning device in a process of positioning by the first positioning device; and the original geographical location information corresponding to the second positioning device is information sent by the positioning server to the second positioning device in a process of positioning by the second positioning device.

In this embodiment of the present invention, specific information included in the auxiliary data and original address location information that is acquired from the satellite when the positioning device performs a positioning operation are specifically explained.

Based on the foregoing embodiment, the sending, by the first positioning device, the auxiliary data to a second positioning device, so that the second positioning device performs positioning according to the auxiliary data and original geographical location information that corresponds to the second positioning device includes: sending, by the first positioning device, the auxiliary data to the second positioning device, so that the second positioning device stores the auxiliary data in a local memory and sets a flag bit, where the flag bit is used to identify that the auxiliary data is locally stored; and when the second positioning device performs a positioning operation, performing, by the second positioning device, positioning according to the auxiliary data and the original geographical location information that corresponds to the second positioning device.

After the first positioning device sends the auxiliary data to the second positioning device, the second positioning device first stores the auxiliary data in the local memory and sets the flag bit, to represent that the auxiliary data is already locally stored; and when performing the positioning operation, the second positioning device receives the original geographical location information that is sent by the satellite and that is used when the second positioning device performs the positioning operation, and calibrates the original geographical location information corresponding to the second positioning device by using the locally stored auxiliary data, instead of acquiring the same auxiliary data from the satellite, so as to obtain accurate latitude and longitude information.

In this embodiment of the present invention, a flag bit is set when a positioning device receives auxiliary data, so that the positioning device determines, according to the flag bit, whether the shared auxiliary data is locally stored, thereby reducing a time consumed as the positioning device communicates with the satellite to acquire the auxiliary data, and improving a positioning speed of the positioning device.

FIG. 2 is a flowchart of a method for sharing data between positioning devices according to another embodiment of the present invention. This embodiment of the present invention is applicable to sharing of auxiliary data between multiple positioning devices in a vehicle, so that a positioning device receiving the auxiliary data performs positioning according to the auxiliary data. Specifically, steps of the method for sharing data between positioning devices are as follows:

Step S201: A second positioning device receives auxiliary data sent by a first positioning device, where the auxiliary data is acquired by the first positioning device from a positioning server and is data for the first positioning device to perform positioning by combining original geographical location information corresponding to the first positioning device.

The first positioning device may be any device that can perform positioning, for example, may be a mobile phone or a vehicle terminal, which is not limited in this embodiment of the present invention. The acquiring, by a first positioning device, auxiliary data from a positioning server such as a satellite is specifically: sending, by the first positioning device, an auxiliary data acquiring request to the satellite, and returning, by the satellite, the auxiliary data to the first positioning device. The auxiliary data is a group of data related to the satellite and is used by the first positioning device to perform positioning by combining original geographical location information corresponding to the first positioning device. Specifically, the first positioning device calibrates the original geographical location information corresponding to the first positioning device by using the auxiliary data, so as to obtain latitude and longitude information corresponding to a geographical location of the first positioning device. The first positioning device sends the auxiliary data to the second positioning device in a wireless transmission manner or in a wired transmission manner.

Step S202: The second positioning device performs positioning according to the auxiliary data and original geographical location information that corresponds to the second positioning device, where the second positioning device and the first positioning device are located in a same local area network.

The second positioning device may be any device that can perform positioning, for example, may be a mobile phone or a vehicle terminal, which is not limited in this embodiment of the present invention. The first positioning device and the second positioning device are located in the same local area network, for example, in a same vehicle. The second positioning device calibrates the original geographical location information corresponding to the second positioning device by using the auxiliary data sent by the first positioning device, so as to obtain the latitude and longitude information corresponding to a geographical location of the second positioning device.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

Based on the foregoing embodiment, the auxiliary data is data acquired by the first positioning device from the positioning server and obtained after parsing, and the auxiliary data includes one or a combination of several of the following data: an ephemeris, an almanac, a time, and status data.

The parsing, by the first positioning device, the auxiliary data acquired from the positioning server is specifically performed by using a fireware chip in the first positioning device, where the parsed auxiliary data includes an ephemeris, an almanac, a time, and status data. The auxiliary data includes an ephemeris, an almanac, a time, and status data. The ephemeris, the almanac, the time, and the status data that are included in the auxiliary data are an ephemeris, an almanac, a time, and status data that corresponds to status information of a satellite at a moment when the satellite sends the auxiliary data, where the ephemeris, the almanac, the time, and the status data are recorded in the satellite at the auxiliary data sending moment. The ephemeris, the almanac, the time, and the status data form a data group, where the data group is stored in the positioning device.

The original geographical location information corresponding to the first positioning device is information sent by the positioning server to the first positioning device in a process of positioning by the first positioning device; and the original geographical location information corresponding to the second positioning device is information sent by the positioning server to the second positioning device in a process of positioning by the second positioning device.

In this embodiment of the present invention, specific information included in the auxiliary data and original address location information that is acquired from the satellite when the positioning device performs a positioning operation are specifically explained.

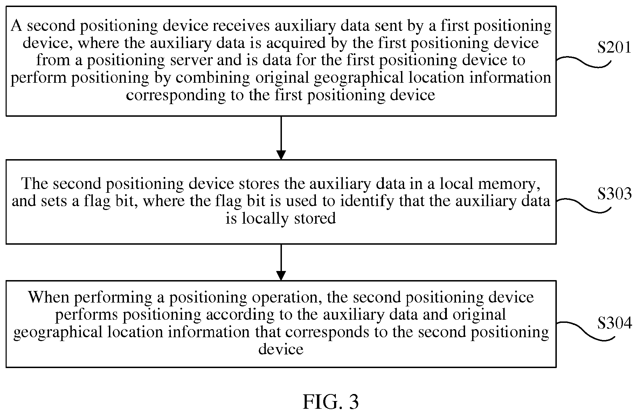

FIG. 3 is a flowchart of a method for sharing data between positioning devices according to another embodiment of the present invention. Based on the foregoing embodiment, step S202 specifically includes the following steps:

Step S303: The second positioning device stores the auxiliary data in a local memory, and sets a flag bit, where the flag bit is used to identify that the auxiliary data is locally stored.

After the first positioning device sends the auxiliary data to the second positioning device, the second positioning device first stores the auxiliary data in the local memory, and sets the flag bit, to represent that the auxiliary data is already locally stored.

Step S304: When performing a positioning operation, the second positioning device performs positioning according to the auxiliary data and the original geographical location information that corresponds to the second positioning device.

When performing the positioning operation, the second positioning device receives the original geographical location information that is sent by a satellite and that is used when the second positioning device performs the positioning operation, and calibrates the original geographical location information corresponding to the second positioning device by using the locally stored auxiliary data, instead of acquiring the same auxiliary data from the satellite, so as to obtain accurate latitude and longitude information.

In this embodiment of the present invention, a flag bit is set when a positioning device receives auxiliary data, so that the positioning device determines, according to the flag bit, whether the shared auxiliary data is locally stored, thereby reducing a time consumed as the positioning device communicates with the satellite to acquire the auxiliary data, and improving a positioning speed of the positioning device.

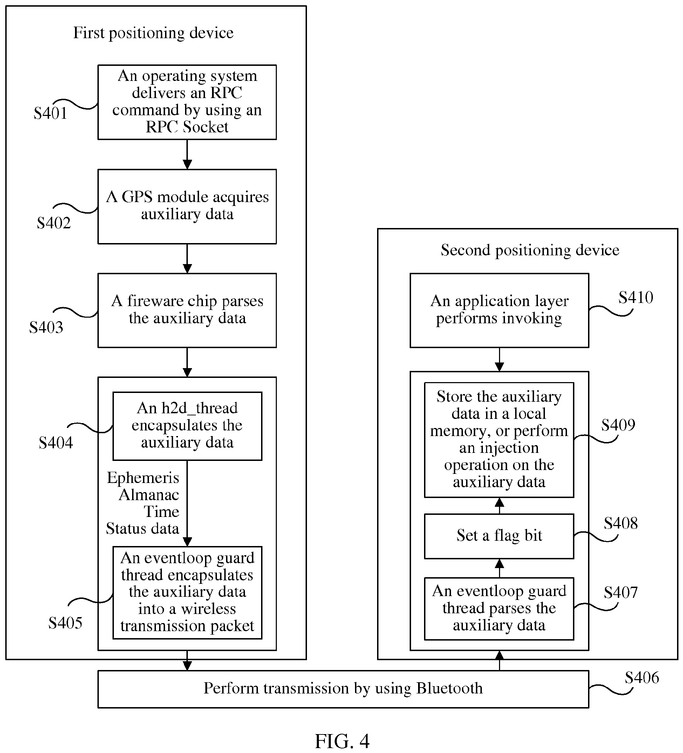

FIG. 4 is a flowchart of a method for sharing data between positioning devices according to another embodiment of the present invention. As shown in FIG. 4, steps of the method for sharing data between positioning devices provided in this embodiment of the present invention are as follows:

Step S401: An operating system in a first positioning device delivers an RPC command by using an RPC Socket.

The operating system in the first positioning device delivers the RPC command to a GPS module by using the RPC Socket.

Step S402: A GPS module of the first positioning device acquires auxiliary data.

The GPS module of the first positioning device communicates with a satellite according to the RPC command, to acquire the auxiliary data.

Step S403: A fireware chip of the first positioning device parses the auxiliary data.

The fireware chip of the first positioning device parses the auxiliary data acquired by the GPS module.

Step S404: An h2d_thread of the first positioning device encapsulates the auxiliary data.

The h2d_thread thread of the first positioning device encapsulates the auxiliary data into a data group, and an element in the data group includes: an ephemeris, an almanac, a time, and status data.

Step S405: An eventloop guard thread of the first positioning device encapsulates the auxiliary data into a wireless transmission packet.

The eventloop guard thread of the first positioning device encapsulates elements in the data group corresponding to the auxiliary data into the wireless transmission packet.

Step S406: The first positioning device transmits the auxiliary data by using Bluetooth.

The first positioning device transmits the auxiliary data to a second positioning device by using the Bluetooth.

Step S407: An eventloop guard thread of a second positioning device parses the auxiliary data.

The eventloop guard thread of the second positioning device parses the auxiliary data sent by the first positioning device.

Step S408: The second positioning device sets a flag bit.

The second positioning device sets the flag bit, to identify that the second positioning device already receives the auxiliary data.

Step S409: The second positioning device stores the auxiliary data in a local memory, or performs an injection operation on the auxiliary data.

The second positioning device stores the auxiliary data in the local memory, or performs the injection operation on the auxiliary data, that is, the second positioning device inputs the auxiliary data to a fireware chip in the second positioning device, so that the fireware chip processes the auxiliary data and original geographical location information that corresponds to the second positioning device, to implement positioning.

Step S410: An application layer of the second positioning device performs invoking.

The application layer of the second positioning device invokes the auxiliary data stored in the local memory, or invokes a processing result of the fireware chip.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

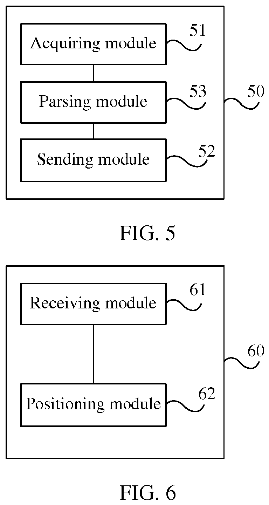

FIG. 5 is a structural diagram of a first positioning device according to an embodiment of the present invention. The first positioning device provided in this embodiment of the present invention may execute a processing procedure provided in an embodiment of the method for sharing data between positioning devices. As shown in FIG. 5, the first positioning device 50 includes an acquiring module 51 and a sending module 52, where the acquiring module 51 is configured to acquire auxiliary data from a positioning server, where the auxiliary data is used by the first positioning device to perform positioning by combining original geographical location information corresponding to the first positioning device; and the sending module 52 is configured to send the auxiliary data to a second positioning device, so that the second positioning device performs positioning according to the auxiliary data and original geographical location information that corresponds to the second positioning device, where the second positioning device and the first positioning device are located in a same local area network.

The acquiring module 51 may be configured to execute the method of step S101 in the foregoing embodiment, and the sending module 52 may be configured to execute the method of step S102 in the foregoing embodiment. For details, refer to the descriptions of the methods in the foregoing embodiment, which are not described herein again.

Based on this embodiment of the present invention, the first positioning device 50 further includes a parsing module 53, configured to parse the auxiliary data acquired by the acquiring module 51 from the positioning server, where the auxiliary data includes one or a combination of several of the following data: an ephemeris, an almanac, a time, and status data.

The acquiring module 51 is further configured to receive the original geographical location information that corresponds to the first positioning device and that is sent by the positioning server to the first positioning device in a process of positioning by the first positioning device.

The sending module 52 is specifically configured to: send the auxiliary data to the second positioning device, so that the second positioning device stores the auxiliary data in a local memory and sets a flag bit, where the flag bit is used to identify that the auxiliary data is locally stored; and when the second positioning device performs a positioning operation, perform positioning according to the auxiliary data and the original geographical location information that corresponds to the second positioning device.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

FIG. 6 is a structural diagram of a second positioning device according to an embodiment of the present invention. The second positioning device provided in this embodiment of the present invention may execute a processing procedure provided in an embodiment of the method for sharing data between positioning devices. As shown in FIG. 6, the second positioning device 60 includes a receiving module 61 and a positioning module 62, where the receiving module 61 is configured to receive auxiliary data sent by a first positioning device, where the auxiliary data is acquired by the first positioning device from a positioning server and is data for the first positioning device to perform positioning by combining original geographical location information corresponding to the first positioning device; and the positioning module 62 is configured to perform positioning according to the auxiliary data and original geographical location information that corresponds to the second positioning device, where the second positioning device and the first positioning device are located in a same local area network.

The receiving module 61 may be configured to execute the method of step S201 in the foregoing embodiment, and the positioning module 62 may be configured to execute the method of step S202 in the foregoing embodiment. For details, refer to the descriptions of the methods in the foregoing embodiment, which are not described herein again.

Based on this embodiment of the present invention, the auxiliary data received by the receiving module is data acquired by the first positioning device from the positioning server and obtained after parsing, and the auxiliary data includes one or a combination of several of the following data: an ephemeris, an almanac, a time, and status data.

The receiving module 61 is further configured to receive the original geographical location information that corresponds to the second positioning device and that is sent by the positioning server to the second positioning device in a process of positioning by the second positioning device.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

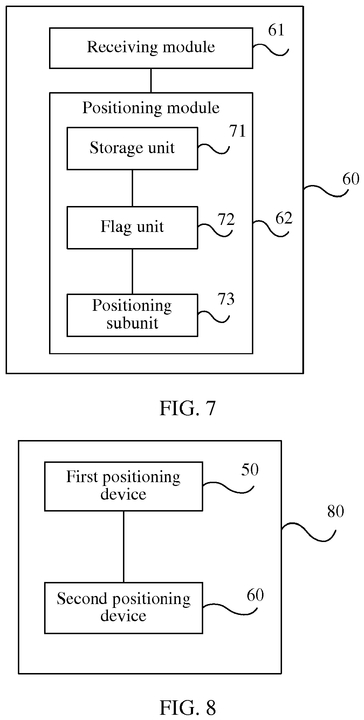

FIG. 7 is a structural diagram of a second positioning device according to another embodiment of the present invention. The second positioning device provided in this embodiment of the present invention may execute a processing procedure provided in an embodiment of the method for sharing data between positioning devices. As shown in FIG. 7, based on the foregoing embodiment, the positioning module 62 in the second positioning device 60 includes: a storage unit 71, a flag unit 72, and a positioning subunit 73, where the storage unit 71 is configured to store auxiliary data in a local memory; the flag unit 72 is configured to set a flag bit, where the flag bit is used to identify that the auxiliary data is locally stored; and the positioning subunit 73 is configured to: when the second positioning device performs a positioning operation, perform positioning according to the auxiliary data and original geographical location information that corresponds to the second positioning device.

The storage unit 71 and the flag unit 72 may be configured to execute the method of step S303 in the foregoing embodiment, and the positioning subunit 73 may be configured to execute the method of step S304 in the foregoing embodiment. For details, refer to the descriptions of the methods in the foregoing embodiment, which are not described herein again.

In this embodiment of the present invention, a flag bit is set when a positioning device receives auxiliary data, so that the positioning device determines, according to the flag bit, whether the shared auxiliary data is locally stored, thereby reducing a time consumed as the positioning device communicates with the satellite to acquire the auxiliary data, and improving a positioning speed of the positioning device.

FIG. 8 is a structural diagram of a system for sharing data between positioning devices according to an embodiment of the present invention. The system for sharing data between positioning devices provided in this embodiment of the present invention may execute a processing procedure provided in an embodiment of the method for sharing data between positioning devices. As shown in FIG. 8, the system for sharing data between positioning devices 80 includes the first positioning device 50 of the foregoing embodiments and the second positioning device 60 of the foregoing embodiments.

The system for sharing data between positioning devices provided in this embodiment of the present invention may execute the processing procedure provided in the embodiment of the method for sharing data between positioning devices.

An embodiment of the present invention provides a first positioning device, which may execute a processing procedure provided in an embodiment of the method for sharing data between positioning devices. The first positioning device includes a receiver and a transmitter, where the receiver is configured to acquire auxiliary data from a positioning server, where the auxiliary data is used by the first positioning device to perform positioning by combining original geographical location information corresponding to the first positioning device; and the transmitter is configured to send the auxiliary data to a second positioning device, so that the second positioning device performs positioning according to the auxiliary data and original geographical location information that corresponds to the second positioning device, where the second positioning device and the first positioning device are located in a same local area network.

The first positioning device further includes a processor, where the processor is configured to parse the auxiliary data acquired by the receiver from the positioning server, and the auxiliary data includes one or a combination of several of the following data: an ephemeris, an almanac, a time, and status data.

The receiver is further configured to receive the original geographical location information that corresponds to the first positioning device and that is sent by the positioning server to the first positioning device in a process of positioning by the first positioning device.

The transmitter is specifically configured to: send the auxiliary data to the second positioning device, so that the second positioning device stores the auxiliary data in a local memory and sets a flag bit, where the flag bit is used to identify that the auxiliary data is locally stored; and when the second positioning device performs a positioning operation, perform positioning according to the auxiliary data and the original geographical location information that corresponds to the second positioning device.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

An embodiment of the present invention provides a second positioning device, which may execute a processing procedure provided in an embodiment of the method for sharing data between positioning devices. The second positioning device includes a receiver and a processor, where the receiver is configured to receive auxiliary data sent by a first positioning device, where the auxiliary data is acquired by the first positioning device from a positioning server and is data for the first positioning device to perform positioning by combining original geographical location information corresponding to the first positioning device; and the processor is configured to perform positioning according to the auxiliary data and original geographical location information that corresponds to the second positioning device, where the second positioning device and the first positioning device are located in a same local area network.

The auxiliary data received by the receiver is data acquired by the first positioning device from the positioning server and obtained after parsing, and the auxiliary data includes one or a combination of several of the following data: an ephemeris, an almanac, a time, and status data.

The receiver is further configured to receive the original geographical location information that corresponds to the second positioning device and that is sent by the positioning server to the second positioning device in a process of positioning by the second positioning device.

The processor is further configured to: store the auxiliary data in a local memory and set a flag bit, where the flag bit is used to identify that the auxiliary data is locally stored; and when the second positioning device performs a positioning operation, perform positioning according to the auxiliary data and the original geographical location information that corresponds to the second positioning device.

In this embodiment of the present invention, auxiliary data is shared between positioning devices, so that the positioning device directly performs positioning by using the shared auxiliary data instead of performing positioning by communicating with a satellite to acquire the same auxiliary data, thereby reducing a time consumed as the positioning device communicates with the satellite to acquire the auxiliary data, and increasing a positioning speed of the positioning device.

Another embodiment of the present invention provides a system for sharing data between positioning devices, where the system for sharing data between positioning devices includes the first positioning device of the foregoing embodiments and the second positioning device of the foregoing embodiments.

The system for sharing data between positioning devices provided in this embodiment of the present invention may execute a processing procedure provided in an embodiment of the method for sharing data between positioning devices.

In conclusion, in the embodiments of the present invention, auxiliary data is shared between positioning devices, a flag bit is set when a positioning device receives the auxiliary data, so that the positioning device determines, according to the flag bit, whether the shared auxiliary data is locally stored, thereby reducing a time consumed as the positioning device communicates with the satellite to acquire the auxiliary data, and improving a positioning speed of the positioning device.

In the several embodiments provided in the present invention, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for sharing data between positioning devices, comprising:
acquiring (S101), by a first positioning device, auxiliary data from a satellite, wherein acquiring of the auxiliary data by the first positioning device from the satellite comprises delivering (S401), by an operating system of the first positioning device, an RPC command to a GPS module of the first positioning device, and communicating (S402), by the GPS module of the first positioning device, with the satellite according to the RPC command, to acquire the auxiliary data; wherein the auxiliary data is used by the first positioning device to perform positioning by combining original geographical location information corresponding to the first positioning device;
parsing (S403), by a fireware chip of the first positioning device, the auxiliary data;
encapsulating (S404), by an h2d_thread of the first positioning device, the auxiliary data into a data group;
encapsulating (S405), by an eventloop guard thread of the first positioning device, elements of the data group corresponding to the auxiliary data into a wireless transmission packet;
sending (S102, S406) using Bluetooth, by the first positioning device, the auxiliary data to a second positioning device, so that the second positioning device performs positioning according to the auxiliary data and original geographical location information that corresponds to the second positioning device;
parsing (S407), by an eventloop guard thread of the second positioning device, the auxiliary data sent by the first positioning device;
setting (S408),by the second positioning device, a flag bit, to identify that the second positioning device already received the auxiliary data;
inputting (S409), by the second positioning device, the auxiliary data to a fireware chip of the second positioning device, so that the fireware chip processes the auxiliary data and original geographical location information that corresponds to the second positioning device to implement positioning;
invoking (S410), by an application layer of the second positioning device, a processing result of the fireware chip of the second positioning device;
wherein the second positioning device and the first positioning device are located in a same local area network.

2. The method according to claim 1, wherein the acquiring (S101), by a first positioning device, auxiliary data from the satellite comprises:
acquiring, by the first positioning device, the auxiliary data from the satellite, and parsing the auxiliary data, wherein the auxiliary data comprises one or a combination of several of the following data: an ephemeris, an almanac, a time, and status data.

3. The method according to claim 2, wherein the original geographical location information corresponding to the first positioning device is information sent by the satellite to the first positioning device in a process of positioning by the first positioning device; and the original geographical location information corresponding to the second positioning device is information sent by the satellite to the second positioning device in a process of positioning by the second positioning device.

4. A system for sharing data between positioning devices, comprising a first positioning device (50) and a second positioning device (60), wherein the first positioning device (50) comprises:
an acquiring module (51), configured to acquire auxiliary data from a satellite, wherein the auxiliary data is acquired by the first positioning device from the satellite, by an operating system of the first positioning device, which is configured to deliver an RPC command to a GPS module of the first positioning device, wherein the GPS module of the first positioning device is configured to communicate with the satellite according to the RPC command, to acquire the auxiliary data; wherein the auxiliary data is used by the first positioning device (50) to perform positioning by combining original geographical location information corresponding to the first positioning device;
a fireware chip configured to parse the auxiliary data;
an h2d_thread configured to encapsulate the auxiliary data into a data group;
an eventloop guard thread configured to encapsulate elements of the data group corresponding to the auxiliary data into a wireless transmission packet;
a sending module (52), configured to send, using Bluetooth, the auxiliary data to the second positioning device (60), so that the second positioning device (60) performs positioning according to the auxiliary data and original geographical location information that corresponds to the second positioning device,
the second positioning device (60) comprising:
a receiving module (61), configured to receive the auxiliary data sent by the first positioning device; and
a positioning module (62), configured to perform positioning according to the auxiliary data and original geographical location information that corresponds to the second positioning device;
an eventloop guard thread for parsing the auxiliary data sent by the first positioning device;
a flag unit (72) configured for setting a flag bit, to identify that the second positioning device already received the auxiliary data;
a fireware chip configured to receive, as input, the auxiliary data, so that the fireware chip is then configured to process the auxiliary data and original geographical location information that corresponds to the second positioning device to implement positioning;
wherein
the second positioning device (60) and the first positioning device (50) are located in a same local area network,

5. The system according to claim 4, wherein the first positioning device (50) further comprises:
a parsing module (53), configured to parse the auxiliary data acquired by the acquiring module from thesatellite, wherein the auxiliary data comprises one or a combination of several of the following data: an ephemeris, an almanac, a time, and status data.

6. The system according to claim 5, wherein the acquiring module (51) is further configured to receive the original geographical location information that corresponds to the first positioning device and that is sent by the satellite to the first positioning device (50) in a process of positioning by the first positioning device.

7. The system according to claim 4, wherein the auxiliary data received by the receiving module (61) is data acquired by the first positioning device from the satellite and obtained after parsing, and the auxiliary data comprises one or a combination of several of the following data: an ephemeris, an almanac, a time, and status data.

8. The system according to claim 7, wherein the receiving module (61) is further configured to receive the original geographical location information that corresponds to the second positioning device and that is sent by the satellite to the second positioning device in a process of positioning by the second positioning device.

9. The system according to any one of claims 4 to 8, wherein the positioning module (62) comprises:
a storage unit (71), configured to store the auxiliary data in a local memory;
the flag unit (72), configured to set a flag bit, wherein the flag bit is used to identify that the auxiliary data is locally stored; and
a positioning subunit (73), configured to: when the second positioning device (60) performs a positioning operation, perform positioning according to the auxiliary data and the original geographical location information that corresponds to the second positioning device.

## Patentansprüche

1. Verfahren zum gemeinsamen Verwenden von Daten zwischen Positionsbestimmungsvorrichtungen, das Folgendes umfasst:
Erfassen (S101) durch eine erste Positionsbestimmungsvorrichtung von Zusatzdaten von einem Satelliten, wobei das Erfassen der Zusatzdaten durch die erste Positionsbestimmungsvorrichtung von dem Satelliten das Zustellen (S401) durch ein Betriebssystem der ersten Positionsbestimmungsvorrichtung eines RPC-Befehls zu einem GPS-Modul der ersten Positionsbestimmungsvorrichtung und Kommunizieren (S402) durch das GPS-Modul der ersten Positionsbestimmungsvorrichtung mit dem Satelliten gemäß dem RPC-Befehl, um die Zusatzdaten zu erfassen, umfasst; wobei die Zusatzdaten durch die erste Positionsbestimmungsvorrichtung verwendet werden, um Positionsbestimmung durch Kombinieren von Informationen über den ursprünglichen geographischen Ort, die der ersten Positionsbestimmungsvorrichtung entsprechen, auszuführen;
Analysieren (S403) durch einen "Fireware"-Chip der ersten Positionsbestimmungsvorrichtung der Zusatzdaten;
Einkapseln (S404) durch einen h2d_"Thread" der ersten Positionsbestimmungsvorrichtung der Hilfsdaten in eine Datengruppe;
Einkapseln (S405) durch einen Ereignisschleifenwächter-"Thread" der ersten Positionsbestimmungsvorrichtung von Elementen der Datengruppe, die den Zusatzdaten entspricht, in ein Drahtlossendepaket;
Senden (S102, S406) unter Verwendung von Bluetooth durch die erste Positionsbestimmungsvorrichtung der Zusatzdaten zu einer zweiten Positionsbestimmungsvorrichtung, so dass die zweite Positionsbestimmungsvorrichtung Positionsbestimmung gemäß den Zusatzdaten und Informationen über den ursprünglichen geographischen Ort, die der zweiten Positionsbestimmungsvorrichtung entsprechen, ausführt;
Analysieren (S407) durch einen Ereignisschleifenwächter-"Thread" der zweiten Positionsbestimmungsvorrichtung der Zusatzdaten, die durch die erste Positionsbestimmungsvorrichtung gesendet werden;
Einstellen (S408) durch die zweite Positionsbestimmungsvorrichtung eines Merker-Bits, um zu identifizieren, dass die zweite Positionsbestimmungsvorrichtung die Zusatzdaten bereits empfangen hat;
Eingeben (S409) durch die zweite Positionsbestimmungsvorrichtung der Zusatzdaten in einen "Fireware"-Chip der zweiten Positionsbestimmungsvorrichtung, so dass der "Fireware"-Chip die Zusatzdaten und die Informationen über den ursprünglichen geographischen Ort, die der zweiten Positionsbestimmungsvorrichtung entsprechen, verarbeitet, um Positionsbestimmung zu implementieren;
Aufrufen (S410) durch eine Anwendungsschicht der zweiten Positionsbestimmungsvorrichtung eines Verarbeitungsergebnisses des "Fireware"-Chips der zweiten Positionsbestimmungsvorrichtung;
wobei sich die zweite Positionsbestimmungsvorrichtung und die erste Positionsbestimmungsvorrichtung in demselben lokalen Netz befinden.

2. Verfahren nach Anspruch 1, wobei das Erfassen (S101) durch eine erste Positionsbestimmungsvorrichtung von Zusatzdaten von dem Satelliten Folgendes umfasst:
Erfassen durch die erste Positionsbestimmungsvorrichtung der Zusatzdaten von dem Satelliten und Analysieren der Zusatzdaten, wobei die Zusatzdaten eines oder eine Kombination aus mehreren der folgenden Daten umfassen: eine Ephemeride, einen Almanach, eine Zeit und Statusdaten.

3. Verfahren nach Anspruch 2, wobei die Informationen über den ursprünglichen geographischen Ort, die der ersten Positionsbestimmungsvorrichtung entsprechen, Informationen sind, die durch den Satelliten zu der ersten Positionsbestimmungsvorrichtung in einem Prozess zur Positionsbestimmung durch die erste Positionsbestimmungsvorrichtung gesendet werden; und die Informationen über den ursprünglichen geographischen Ort, die der zweiten Positionsbestimmungsvorrichtung entsprechen, Informationen sind, die durch den Satelliten zu der zweiten Positionsbestimmungsvorrichtung in einem Prozess zur Positionsbestimmung durch die zweite Positionsbestimmungsvorrichtung gesendet werden.

4. System zum gemeinsamen Verwenden von Daten zwischen Positionsbestimmungsvorrichtungen, das eine erste Positionsbestimmungsvorrichtung (50) und eine zweite Positionsbestimmungsvorrichtung (60) umfasst, wobei die erste Positionsbestimmungsvorrichtung (50) Folgendes umfasst:
ein Erfassungsmodul (51), das konfiguriert ist, Zusatzdaten von einem Satelliten zu erfassen, wobei die Zusatzdaten durch die erste Positionsbestimmungsvorrichtung von dem Satelliten durch ein Betriebssystem der ersten Positionsbestimmungsvorrichtung, das konfiguriert ist, einen RPC-Befehl zu einem GPS-Modul der ersten Positionsbestimmungsvorrichtung zuzustellen, erfasst werden, wobei das GPS-Modul der ersten Positionsbestimmungsvorrichtung konfiguriert ist, mit dem Satelliten gemäß dem RPC-Befehl zu kommunizieren, um die Zusatzdaten zu erfassen; wobei die Zusatzdaten durch die erste Positionsbestimmungsvorrichtung (50) verwendet werden, um Positionsbestimmung durch Kombinieren von Informationen über den ursprünglichen geographischen Ort, die der ersten Positionsbestimmungsvorrichtung entsprechen, auszuführen;
einen "Fireware"-Chip, der konfiguriert ist, die Zusatzdaten zu analysieren;
einen h2d_"Thread", der konfiguriert ist, die Zusatzdaten in eine Datengruppe einzukapseln;
einen Ereignisschleifenwächter-"Thread", der konfiguriert ist, Elemente der Datengruppe, die den Zusatzdaten entspricht, in ein Drahtlossendepaket einzukapseln;
ein Sendemodul (52), das konfiguriert ist, unter Verwendung von Bluetooth die Zusatzdaten zu der zweiten Positionsbestimmungsvorrichtung (60) zu senden, so dass die zweite Positionsbestimmungsvorrichtung (60) die Positionsbestimmung gemäß den Zusatzdaten und Informationen über den ursprünglichen geographischen Ort, die der zweiten Positionsbestimmungsvorrichtung entsprechen, ausführt,
wobei die zweite Positionsbestimmungsvorrichtung (60) Folgendes umfasst:
ein Empfangsmodul (61), das konfiguriert ist, die durch die erste Positionsbestimmungsvorrichtung gesendeten Zusatzdaten zu empfangen; und
ein Positionsbestimmungsmodul (62), das konfiguriert ist, Positionsbestimmung gemäß den Zusatzdaten und Informationen über den ursprünglichen geographischen Ort, die der zweiten Positionsbestimmungsvorrichtung entsprechen, auszuführen;
einen Ereignisschleifenwächter-"Thread" zum Analysieren der durch die erste Positionsbestimmungsvorrichtung gesendeten Zusatzdaten;
eine Merker-Einheit (72), die zum Einstellen eines Merker-Bits konfiguriert ist, um zu identifizieren, dass die zweite Positionsbestimmungsvorrichtung die Zusatzdaten bereits empfangen hat;
einen "Fireware"-Chip, der konfiguriert ist, die Zusatzdaten als Eingabe zu empfangen, so dass der "Fireware"-Chip dann konfiguriert ist, die Zusatzdaten und die Informationen über den ursprünglichen geographischen Ort, die der zweiten Positionsbestimmungsvorrichtung entsprechen, zu verarbeiten, um Positionsbestimmung zu implementieren;
wobei sich die zweite Positionsbestimmungsvorrichtung (60) und die erste Positionsbestimmungsvorrichtung (50) in demselben lokalen Netz befinden.

5. System nach Anspruch 4, wobei die erste Positionsbestimmungsvorrichtung (50) ferner Folgendes umfasst:
ein Analysemodul (53), das konfiguriert ist, die Zusatzdaten, die durch das Erfassungsmodul von dem Satelliten erfasst werden, zu analysieren, wobei die Zusatzdaten eines oder eine Kombination aus mehreren der folgenden Daten umfassen:
eine Ephemeride, einen Almanach, eine Zeit und Statusdaten.

6. System nach Anspruch 5, wobei das Erfassungsmodul (51) ferner konfiguriert ist, die Informationen über den ursprünglichen geographischen Ort, die der ersten Positionsbestimmungsvorrichtung entsprechen und die durch den Satelliten zu der ersten Positionsbestimmungsvorrichtung (50) in einem Prozess zur Positionsbestimmung durch die erste Positionsbestimmungsvorrichtung gesendet werden, zu empfangen.

7. System nach Anspruch 4, wobei die Zusatzdaten, die durch das Empfangsmodul (61) empfangen werden, Daten sind, die durch die erste Positionsbestimmungsvorrichtung von dem Satelliten erfasst werden und nach dem Analysieren erhalten werden, und wobei die Zusatzdaten eines oder eine Kombination aus mehreren der folgenden Daten umfassen: eine Ephemeride, einen Almanach, eine Zeit und Statusdaten.

8. System nach Anspruch 7, wobei das Empfangsmodul (61) ferner konfiguriert ist, die Informationen über den ursprünglichen geographischen Ort, die der zweiten Positionsbestimmungsvorrichtung entsprechen und die durch den Satelliten zu der zweiten Positionsbestimmungsvorrichtung in einem Prozess zur Positionsbestimmung durch die zweite Positionsbestimmungsvorrichtung gesendet werden, zu empfangen.

9. System nach einem der Ansprüche 4 bis 8, wobei das Positionsbestimmungsmodul (62) Folgendes umfasst:
eine Speichereinheit (71), die konfiguriert ist, die Zusatzdaten in einem lokalen Speicher zu speichern;
die Merker-Einheit (72), die konfiguriert ist, ein Merker-Bit einzustellen, wobei das Merker-Bit verwendet wird, um zu identifizieren, dass die Zusatzdaten lokal gespeichert sind; und
eine Positionsbestimmungsuntereinheit (73), die konfiguriert ist zum: wenn die zweite Positionsbestimmungsvorrichtung (60) eine Positionsbestimmungsoperation ausführt, Ausführen der Positionsbestimmung gemäß den Zusatzdaten und den Informationen über den ursprünglichen geographischen Ort, die der zweiten Positionsbestimmungsvorrichtung entsprechen.

## Revendications

1. Procédé pour partager des données entre des dispositifs de positionnement, comprenant les étapes consistant à :
acquérir (S101), par un premier dispositif de positionnement, des données auxiliaires à partir d'un satellite, dans lequel l'acquisition des données auxiliaires par le premier dispositif de positionnement à partir du satellite comprend la fourniture (S401), par un système d'exploitation du premier dispositif de positionnement, d'une commande RPC à un module GPS du premier dispositif de positionnement, et la communication (S402), par le module GPS du premier dispositif de positionnement, avec le satellite selon la commande RPC, pour acquérir les données auxiliaires ; dans lequel les données auxiliaires sont utilisées par le premier dispositif de positionnement pour effectuer un positionnement en combinant des informations de localisation géographique d'origine correspondant au premier dispositif de positionnement ;
analyser (S403), par une puce fireware du premier dispositif de positionnement, les données auxiliaires ;
encapsuler (S404), par un fil d'exécution h2d du premier dispositif de positionnement, les données auxiliaires dans un groupe de données ;
encapsuler (S405), par un fil d'exécution de garde de boucle d'événements du premier dispositif de positionnement, des éléments du groupe de données correspondant aux données auxiliaires dans un paquet de transmission sans fil ;
envoyer (S102, S406) en utilisant le Bluetooth, par le premier dispositif de positionnement, les données auxiliaires à un second dispositif de positionnement, de sorte que le second dispositif de positionnement effectue un positionnement en fonction des données auxiliaires et des informations de localisation géographique d'origine qui correspondent au second dispositif de positionnement ;
analyser (S407), par un fil d'exécution de garde de boucle d'événements du second dispositif de positionnement, les données auxiliaires envoyées par le premier dispositif de positionnement ;
régler (S408), par le second dispositif de positionnement, un bit de drapeau, pour identifier que le second dispositif de positionnement a déjà reçu les données auxiliaires ;
entrer (S409), par le second dispositif de positionnement, les données auxiliaires dans une puce fireware du second dispositif de positionnement, de sorte que la puce fireware traite les données auxiliaires et les informations de localisation géographique d'origine qui correspondent au second dispositif de positionnement pour mettre en œuvre le positionnement ;
invoquer (S410), par une couche d'application du second dispositif de positionnement, un résultat de traitement de la puce fireware du second dispositif de positionnement ;
dans lequel le second dispositif de positionnement et le premier dispositif de positionnement sont situés dans un même réseau local.

2. Procédé selon la revendication 1, dans lequel l'acquisition (S101), par un premier dispositif de positionnement, de données auxiliaires à partir du satellite comprend les étapes consistant à :
acquérir, par le premier dispositif de positionnement, les données auxiliaires à partir du satellite, et analyser les données auxiliaires, dans lequel les données auxiliaires comprennent une ou une combinaison de plusieurs des données suivantes : une éphéméride, un almanach, une heure, et des données d'état.

3. Procédé selon la revendication 2, dans lequel les informations de localisation géographique d'origine correspondant au premier dispositif de positionnement sont des informations envoyées par le satellite au premier dispositif de positionnement dans un processus de positionnement par le premier dispositif de positionnement ; et les informations de localisation géographique d'origine correspondant au second dispositif de positionnement sont des informations envoyées par le satellite au second dispositif de positionnement dans un processus de positionnement par le second dispositif de positionnement.

4. Système de partage de données entre des dispositifs de positionnement, comprenant un premier dispositif de positionnement (50) et un second dispositif de positionnement (60), dans lequel le premier dispositif de positionnement (50) comprend :
un module d'acquisition (51), configuré pour acquérir des données auxiliaires à partir d'un satellite, dans lequel les données auxiliaires sont acquises par le premier dispositif de positionnement à partir du satellite, par un système d'exploitation du premier dispositif de positionnement, qui est configuré pour fournir une commande RPC à un module GPS du premier dispositif de positionnement, dans lequel le module GPS du premier dispositif de positionnement est configuré pour communiquer avec le satellite selon la commande RPC, pour acquérir les données auxiliaires ; dans lequel les données auxiliaires sont utilisées par le premier dispositif de positionnement (50) pour effectuer un positionnement en combinant des informations de localisation géographique d'origine correspondant au premier dispositif de positionnement ;
une puce fireware configurée pour analyser les données auxiliaires ;
un fil d'exécution h2d configuré pour encapsuler les données auxiliaires dans un groupe de données ;
un fil d'exécution de garde de boucle d'événements configuré pour encapsuler des éléments du groupe de données correspondant aux données auxiliaires dans un paquet de transmission sans fil ;
un module d'envoi (52), configuré pour envoyer, en utilisant le Bluetooth, les données auxiliaires au second dispositif de positionnement (60), de sorte que le second dispositif de positionnement (60) effectue un positionnement en fonction des données auxiliaires et des informations de localisation géographique d'origine qui correspondent au second dispositif de positionnement,
le second dispositif de positionnement (60) comprenant :
un module de réception (61), configuré pour recevoir les données auxiliaires envoyées par le premier dispositif de positionnement ; et
un module de positionnement (62), configuré pour effectuer un positionnement en fonction des données auxiliaires et des informations de localisation géographique d'origine qui correspondent au second dispositif de positionnement ;
un fil d'exécution de garde de boucle d'événements pour analyser les données auxiliaires envoyées par le premier dispositif de positionnement ;
une unité de drapeau (72) configurée pour régler un bit de drapeau, pour identifier que le second dispositif de positionnement a déjà reçu les données auxiliaires ;
une puce fireware configurée pour recevoir, en entrée, les données auxiliaires, de sorte que la puce fireware est alors configurée pour traiter les données auxiliaires et les informations de localisation géographique d'origine qui correspondent au second dispositif de positionnement pour mettre en oeuvre le positionnement ;
dans lequel le second dispositif de positionnement (60) et le premier dispositif de positionnement (50) sont situés dans un même réseau local.

5. Système selon la revendication 4, dans lequel le premier dispositif de positionnement (50) comprend en outre :
un module d'analyse (53), configuré pour analyser les données auxiliaires acquises par le module d'acquisition à partir du satellite, dans lequel les données auxiliaires comprennent une des données suivantes ou une combinaison de plusieurs des données suivantes : une éphéméride, un almanach, une heure, et des données d'état.

6. Système selon la revendication 5, dans lequel le module d'acquisition (51) est en outre configuré pour recevoir les informations de localisation géographique d'origine qui correspondent au premier dispositif de positionnement et qui sont envoyées par le satellite au premier dispositif de positionnement (50) dans un processus de positionnement par le premier dispositif de positionnement.

7. Système selon la revendication 4, dans lequel les données auxiliaires reçues par le module de réception (61) sont des données acquises par le premier dispositif de positionnement à partir du satellite et obtenues après analyse, et les données auxiliaires comprennent une des données suivantes ou une combinaison de plusieurs des données suivantes : une éphéméride, un almanach, une heure, et des données d'état.

8. Système selon la revendication 7, dans lequel le module de réception (61) est en outre configuré pour recevoir les informations de localisation géographique d'origine qui correspondent au second dispositif de positionnement et qui sont envoyées par le satellite au second dispositif de positionnement dans un processus de positionnement par le second dispositif de positionnement.

9. Système selon l'une quelconque des revendications 4 à 8, dans lequel le module de positionnement (62) comprend :
une unité de stockage (71), configurée pour stocker les données auxiliaires dans une mémoire locale ;
l'unité de drapeau (72), configurée pour régler un bit de drapeau, dans lequel le bit de drapeau est utilisé pour identifier que les données auxiliaires sont stockées localement ; et
une sous-unité de positionnement (73), configurée pour : lorsque le second dispositif de positionnement (60) effectue une opération de positionnement, effectuer un positionnement en fonction des données auxiliaires et des informations de localisation géographique d'origine qui correspondent au second dispositif de positionnement.
